# EUROPÄISCHE PATENTSCHRIFT

(11) **EP 0 946 304 B1**
(45) Veröffentlichungstag und Bekanntmachung des Hinweises auf die Patenterteilung: **11.09.2002**
(21) Anmeldenummer: 97953844.4
(22) Anmeldetag: 18.12.1997
(51) Int. Cl.: B02C 18/44, B02C 18/14

(54) **MESSERMÜHLE ZUR ZERKLEINERUNG VON KUNSTSTOFFMATERIAL**
BLADE MILL FOR GRINDING PLASTIC MATERIAL
BROYEUR A LAMES POUR LE BROYAGE DE MATIERE PLASTIQUE

(30) Priorität: 19.12.1996 DE 19652904
(43) Veröffentlichungstag der Anmeldung: 06.10.1999
(73) Patentinhaber: NUGA AG Kunststoffschneidemühlen, 9436 Balgach (DE)
(72) Erfinder: PÖLTINGER, Bruno, CH-9436 Balgach (CH)
(74) Vertreter: Riebling, Peter, Dr.-Ing.
(86) Internationale Anmeldenummer: EP9707103
(87) Internationale Veröffentlichungsnummer: WO98026873

(56) Entgegenhaltungen:
- EP-A- 0 266 584
- WO-A-88/08751
- GB-A- 2 124 512
- US-A- 4 151 960
- US-A- 4 351 488

## Beschreibung

Gegenstand der Erfindung ist eine Messermühle zur Zerkleinerung von Kunststoffmaterial nach dem Oberbegriff des Patentanspruchs 1. Eine derartige Messermühle ist beispielsweise mit dem Forschungsbericht des Forschungsinstitutes Kunststoff-Recycling - D. Jungert, R. Verhoeven: Kunststoff-Zerkleinerungsmaschinen Marktübersicht 1995; Forschungsinstitutkunststoff-Recycling GmbH, Willich bekannt geworden.

Bei dieser bekannten Anordnung wird eine Messermühle zur Zerkleinerung von Kunststoffmahlgut in der Form vorgeschlagen, daß ausgehend von einem Einwurfschacht eine Förderschnecke das zu zerkleinernde Mahlgut in einen Mahlraum gefördert wird, in welchem Mahlraum auf einer drehend angetriebenen Rotorwalze mehrere am Umfang gleichmäßig verteilt angeordnete und radial nach außen gerichtete Schneidmesser vorhanden sind, die einen geringen Abstand zu einem radial außen liegenden und den Umfang des Mahlraumes bestimmenden Lochsieb einnehmen. In den Mahlraum ragen ortsfeste, radial einwärts gerichtete Statormesser hinein, die zusammen mit den schnell umlaufenden radial nach außen gerichteten Schneidmessern einen Messerspalt bilden.

Nachteil dieser bekannten Messermühle war, daß die Zerkleinerungsleistung nur mit einer relativ hohen Antriebsleistung erbracht werden konnte. Beobachtungen haben gezeigt, daß das zu zerkleinernde Gut erst eine ganze Zeit lang im Mahlraum tanzt und von den schnell umlaufenden Schneidmessern zerschlagen und teilweise beschädigt wird, ohne daß die eigentlich, gewünschte Zerkleinerung stattfindet. Damit wird eine große Reibung auf die Messer tragende Rotorwalze ausgeübt, weil das Mahlgut nur gelegentlich und relativ unkontrolliert in den Messerspalt zwischen den umlaufenden inneren Schneidmessern mit den äußeren, feststehenden Statorschneidmessern gelangt.

Dementsprechend war auch die Antriebsleitung für die Rotorwalze hoch zu bemessen, um eine entsprechende Zerkleinerungsleistung zu erbringen.

Der Erfindung liegt deshalb die Aufgabe zugrunde, eine Messermühle der eingangs genannten Art so weiterzubilden, daß bei gleicher Zerkleinerungsleistung eine wesentlich geringere Antriebsleistung für die Rotorwalze erforderlich ist.

Zur Lösung der gestellten Aufgabe dient die technische Lehre nach Anspruch 1 der vorliegenden Erfindung. Wesentliches Merkmal der vorliegenden Erfindung ist, daß nun in Drehrichtung vor den Statormessern sich sichelförmig nach außen radial erweiternde Schneidräume vorhanden sind, wobei sich der jeweilige Schneidraum radial auswärts des Drehkreises der rotierenden Messer befindet.

Mit der gegebenen technischen Lehre wird der wesentliche Vorteil erreicht, daß das zu zerkleinernde Mahlgut aufgrund der vorhandenen Zentrifugalwirkung stets am Innenumfang des Lochsiebes entlang geführt wird. Nun wird gemäß der vorliegenden Erfindung diesem am Innenumfang des Lochsiebes entlang geführten Mahlgut ein Aufnahmeraum gegeben, welcher sich in Drehrichtung der Schneidmesser gesehen - sichelförmig radial auswärts öffnet, so daß er also - wiederum in Drehrichtung gesehen - vor dem eigentlichen ortsfesten Statormesser mit der Kreislinie der umlaufenden Messer zusammenfällt und mit zunehmender Annäherung an die ortsfesten Statormesser sich radial auswärts öffnet, so daß er im Bereich der Statormesser seine größte radiale Öffnung aufweist.

Wesentlich hierbei ist, daß die größte radiale Weite dieses sichelförmigen Raumes nur geringfügig größer ist oder gleich groß als die Korngröße des zu zerkleinernden Materials.

Die Korngröße des zu zerkleinernden Materials wird wiederum durch die Lochgröße des Lochsiebes bestimmt. Damit wird gewährleistet, daß das zu zerkleinernde Mahlgut-Material in dem sichelförmigen Raum aufgenommen wird und - soweit größere Mahlgutteile in den sichelförmigen Raum gelangen - werden diese größere Mahlgutteile von den Messern an den jeweils gegenüberliegenden Statormessern entsprechend zerkleinert.

Durch die erfindungsgemäß vorhandenen sichelförmig sich erweiternden Schneideräume werden also Pufferstationen für das zu zerkleinernde Mahlgut geschaffen, welches dadurch beruhigt wird und nicht mehr im Mahlraum hin und her springt und die Drehbewegung der umlaufenden Messer behindert.

Damit wird also wesentliche Antriebsenergie eingespart.

Ein weiterer Vorteil der Erfindung liegt auch darin, daß das Mahlgut nicht von radial außerhalb in den Mahlraum eingeführt wird, sondern daß das Mahlgut mit Hilfe einer Förderschnecke oder einem anderen Längsförderer in axialer Richtung in die umlaufende Rotorwalze eingebracht wird. Dadurch können nun wesentlich größere Lochsiebe verwendet werden. Die bekannten Anordnungen verwenden nämlich lediglich ein einziges Lochsieb, welches an der dem Einfüllschacht gegenüberliegenden Seite des Mahlraumes angeordnet ist und den Mahlraum an einer Seite begrenzt. Bei der Erfindung hingegen besteht der Vorteil, daß aufgrund der axialen Zuführung des Mahlgutes in den Mahlraum nun beide Seiten des Mahlraumes von entsprechenden Lochsieben umgrenzt werden können und daher eine wesentlich größere Fläche von Lochsieben zur Verfügung steht.

Damit ist auch die Zerkleinerungsleistung der Maschine wesentlich verbessert, weil das zu zerkleinernde Mahlgut wesentlich schneller nach außen durch die Lochsiebe transportiert werden kann als vergleichsweise bei einer Anordnung, bei der lediglich ein einziges, relativ kleines Lochsieb vorhanden ist.

Bei einer Anordnung, bei der der Zuführschacht direkt radial in den Mahlraum einläuft besteht im übrigen der weitere Nachteil, daß die Statormesser nur ungleichmäßig im Mahlraum angeordnet werden können und damit besteht der Nachteil, daß das Mahlgut nur in unregelmäßigen Taktfolgen zerkleinert werden kann, was die Laufruhe der Maschine beeinträchtigt. Bei der vorliegenden Erfindung hingegen ist es aufgrund der axialen Einführung des Mahlgutes in den Mahlraum nun erstmals möglich, die Statormesser am Umfang gleichmäßig verteilt anzuordnen, z. B. paarweise aneinander gegenüberliegend im Drehwinkelabstand z. B. von 30 Grad. Hierdurch ergibt sich ein absolut gleichmäßiges Verteilen des Mahlgutes und eine gute Laufruhe der Maschine.

Aufgrund der axialen Einführung des Mahlgutes in den Rotor ergibt sich der weitere Vorteil, daß ein gleichmäßiger Luftstrom über den Längsförderer zusammen mit dem Mahlgut in axialer Richtung in den Mahlraum eingeleitet werden kann. Aufgrund dieses gleichmäßigen Luftstromes, der sich im gesamten Mahlraum gleichmäßig radial nach außen verteilen kann wird das gesamte Mahlgut im Mahlraum von diesem Luftstrom erfaßt und gekühlt, was bei einer bekannten Anordnung nicht möglich ist. Bei dieser bekannten Anordnung wird lediglich die Luft über den in radialer Richtung an den Mahlraum ansetzenden Zuführschacht angesaugt und kühlt dementsprechend auch nur einen Teil des Mahlgutes, während der dem Zuführschacht entgegengesetzte Teil des Mahlgutes nicht mehr von dem Luftstrom durchsetzt wird.

Ein weiterer Vorteil nach der Erfindung besteht darin, daß die Lochsiebe als Siebkörbe ausgebildet sind, welche schwenkbar am Maschinengehäuse gelagert sind und dementsprechend in ihrem Öffnungszustand von der Maschine abschwenkbar sind. Damit ist eine vollständige, umfängliche Zugänglichkeit des Rotors und der Statormesser gegeben.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigt:

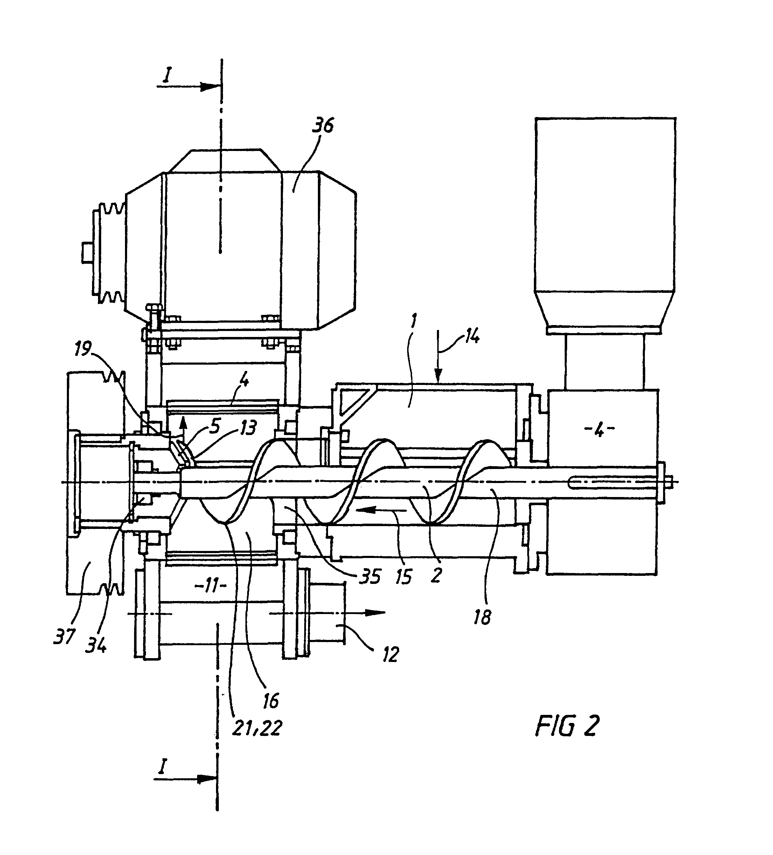

- Figur 1:: Schnitt durch eine Messermühle nach der Erfindung in Richtung des Pfeiles I - I in Figur 2;
- Figur 2:: Seitenansicht der Anordnung nach Figur 1 in Richtung des Pfeiles II;
- Figur 3:: Schematisiert gezeichnete Detailansicht eines Schneideraumes nach der Erfindung.

Die Messermühle nach der Erfindung besteht aus einem Gehäuse, an dem ein Einwurfschacht 1 angeordnet ist, in welches das zu zerkleinernde Mahlgut in Pfeilrichtung 14 eingefüllt wird. Im Bereich des Einwurfschachtes 1 ist eine Förderschnecke 2 drehbar angetrieben, die von einem Getriebemotor 3 beaufschlagt wird. Das gegenüberliegende Lager 34 der Förderschnecke 2 ist im Bereich des Rotorlagers einer drehbar angetriebenen Rotorwalze 17 angeordnet. Die beiden Lager sind also koaxial zueinander angeordnet.

Das von der Förderschnecke 2 in Pfeilrichtung 15 geförderte Material wird zunächst durch den Eingang 35 in einen Mahlraum 16 gefördert, wo das Material auf einen ortsfest angeordnetes Axialmesser 5 trifft und hierbei auf die als Schneidekante 22 ausgebildete Außenfläche 21 der Förderschnecke 2 trifft und in Pfeilrichtung 19 radial in den Mahlraum 16 abgeschleudert wird. Gegenüberliegend ist dem Axialmesser 5 ein Gegenmesser 13 zugeordnet, welches am axialen Ende der Förderschnecke 2 angeordnet ist. Die Förderschnecke wird hierbei z. B. mit einer Umdrehungszahl von 25 Umdrehungen pro Minute angetrieben, während die Rotorwalze 17 mit einer Umdrehungszahl von etwa 1200 Umdrehungen pro Minute angetrieben wird. Der Antrieb erfolgt hierbei über einen Antriebsmotor 36, der über einen Keilriemen ein Schwungrad 37 antreibt, welches seinerseits direkt drehfest mit der Stirnseite der Rotorwalze 17 gekoppelt ist, die an dem gegenüberliegenden Ende an einem Ringlager drehbar im Gehäuse gelagert ist.

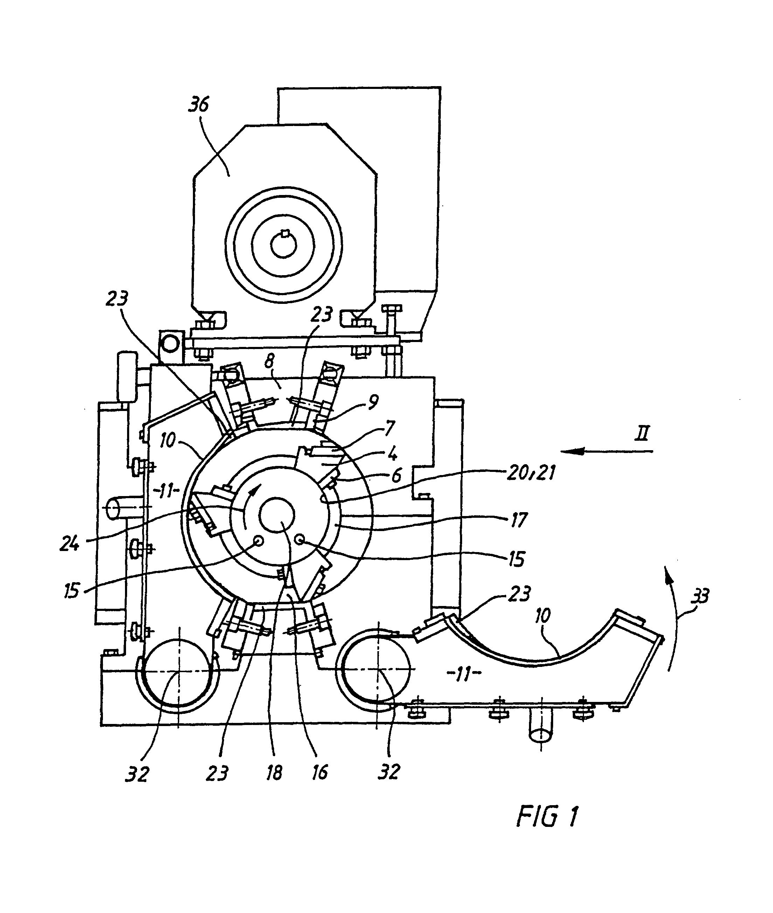

Gemäß Figur 1 ist die Rotorwalze 17 als Hohlwelle ausgebildet, so daß in diese Hohlwelle die Schneckenwelle 18 der Förderschnecke 2 mündet und die Schneidkanten 22 aufweisenden Außenflächen 21 der Förderschnecke 2 einen Schnittspalt 20 mit zugeordneten, am Innenumfang der Rotorwalze 17 angeordneten Innenschneidmessern 6 bilden.

Während die Rotorwalze 17 beispielsweise in Pfeilrichtung 24 drehend angetrieben wird, wird die Förderschnecke 2 in Gegenrichtung hierzu angetrieben. Auf diese Weise kommt es zu einem ersten Schneideffekt zwischen den Schneidkanten 22 der Förderschnecke und der zugeordneten Innenschneidmessern 6 der umlaufend angetriebenen Rotorwalze 17.

Das hierdurch schon vorzerkleinerte Material wird in Pfeilrichtung 19 durch die Rotorwalze 17 hindurch in Richtung zu der äußeren Begrenzung des Mahlraumes 16 geschleudert. Diese äußere Begrenzung wird erfindungsgemäß durch zwei aneinander gegenüberliegende Lochsiebe 10 gebildet, welche Lochsiebe, Teile von schwenkbar angeordneten Siebkörben 11 sind.

Jeder Siebkorb 11 besteht hierbei aus einem schwenkbaren Teil, welches an der Schwenkachse 32 schwenkbar am Gehäuse gelagert ist, wo in Figur 1 auf der linken Seite der eingeschwenkte Siebkorb 11 und Figur 1 auf der rechten Seite der zur Wartungs- oder Reparaturzwecken ausgeschwenkte Siebkorb 11 dargestellt ist. Die Lochsiebe 10 sind der kreisrunden Form des Mahlraumes 16 angepaßt und definieren über den größten Winkelgrad des Mahlraumes die Außenkonturen dieses Mahlraumes.

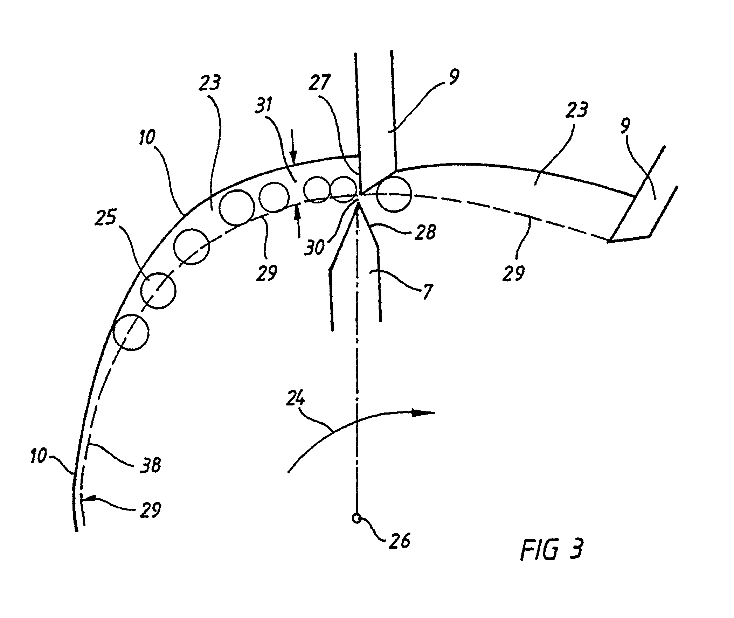

Wichtig ist nun, daß die Formgebung der Lochsiebe 10 im Bereich vor den feststehenden Statormessern 9 von der Kreisform abweicht, wie dies in Figur 3 näher dargestellt ist.

Hier ist gezeigt, daß die Außenschneidmesser 7, die gleichmäßig verteilt am Umfang des Messerschneiderotors 4 angeordnet sind, im wesentlichen mit ihren Spitzen einen Drehkreis 29 beschreiben.

Über einen wesentlichen Teil des Umdrehungswinkels der Rotorwalze entspricht die Kontur der Lochsiebe 10 diesem Drehkreis 29.

Erfindungsgemäß weicht nun diese Kreiskontur der Lochsiebe im Raum vor den jeweils fest angeordneten Statormessern 9 von dieser Kreislinie ab, weil sich dieser Schneideraum 23 radial um eine Schneideraumbreite 31 nach außen erweitert.

Figur 3 zeigt, daß bei Position 38 die Kreislinie 29 sich weiter fortsetzt, während von dieser Position 38 ausgehend das Lochsieb sich radial nach außen erweitert und diese sichelförmige Kontur (Außenfläche) des Schneideraums 23 bildet.

Hierbei ist erkennbar, daß das zu zerkleinernde Mahlgut etwa so groß ist, daß es gerade in diesem Schneideraum 23 Platz hat. Es hat sinngemäß in Pfeilrichtung 24 zwangsläufig gegen das Statormesser geführt und gelangt dann dementsprechend auch zwangsläufig in den Messerspalt 30 zwischen dem Außenschneidmesser 7 und dem Statormesser 9.

Die Figur 3 zeigt im übrigen auch noch schematisch, daß vor dem weiteren Statormesser 9 der gleiche Schneideraum 23 angeordnet ist und daß diese technische Lehre für alle in der Figur 1 dargestellten Statormesser 9 gilt.

Wenn man von einem Lochdurchmesser von etwa 10 Millimeter für ein Lochsieb ausgeht, dann ist die Breite 31 des Schneideraums 23 etwa gleich oder nur geringfügig größer als 10 Millimeter, um zu gewährleisten, daß das zu zerkleinernde Mahlgut als Aufnahmeraum in diesen Schneideraum 23 gefördert wird und hierdurch beruhigt wird, ohne an den Lochsieben entlang zu springen und wieder in den Mahlraum hineinzufallen.

Der vorher erwähnte Messerspalt wird im übrigen gebildet durch eine in Drehrichtung vorne liegende Schneidkante 27 des jeweiligen Statormessers 9 und eine in Drehrichtung hinten liegende Schneidkante 28 des Außenschneidmessers 7.

Das zerkleinernde Material gelangt also in die Lochsiebe, wird in den Siebkorb 11 gefördert und von einem Sauggebläse (nicht dargestellt) aus dem Auslauf 12 wegbefördert.

Im übrigen zeigt die Figur 1, daß die beiden Siebkörbe 11 in Pfeilrichtung 33 und in Gegenrichtung hierzu um die Schwenkachsen 32 am Mahlgehäuse 8 befestigt sind.

Aus der gegebenen technischen Lehre ergibt sich also der wesentliche Vorteil, daß mit wesentlich geringerer Antriebsleistung eine höhere Mahlleistung erzielt werden kann.

Im übrigen ergibt sich eine wesentlich verbesserte Laufruhe, ein geringeres Mahlgeräusch und eine leichte Auswechselbarkeit aller Teile, weil diese Teile wegen der Verschwenkbarkeit der Siebkörbe 11 leicht zugänglich sind.

### Zeichnungslegende

- 1: Einwurfschacht
- 2: Förderschnecke
- 3: Getriebemotor
- 4: Messerschneiderotor
- 5: Axialmesser
- 6: Innenschneidmesser
- 7: Außenschneidmesser
- 8: Mahlgehäuse
- 9: Statormesser
- 10: Lochsieb
- 11: Siebkorb
- 12: Auslauf
- 13: Gegenmesser
- 14: Pfeilrichtung
- 15: Pfeilrichtung
- 16: Innerer Mahlraum
- 17: Rotorwalze
- 18: Schneckenwelle
- 19: Pfeilrichtung
- 20: Schnittspalt
- 21: Außenfläche
- 22: Schneidekante
- 23: Schneideraum
- 24: Drehrichtung
- 25: Mahlgut
- 26: Drehmittelpunkt
- 27: Schneidkante (Statormesser 9)
- 28: Schneidkante (Außenschneidmesser 7)
- 29: Drehkreis
- 30: Messerspalt
- 31: Schneideraumbreite
- 32: Schwenkachse
- 33: Pfeilrichtung
- 34: Lager
- 35: Eingang
- 36: Antriebsmotor
- 37: Schwungrad
- 38: Position

## Patentansprüche

1. Messermühle zur Zerkleinerung von Kunststoffmaterial, mit einer in einem Mahlraum rotierend angetriebenen Rotorwalze, die mehrere am Umfang verteilt angeordnete, radial nach außen gerichtete Schneidmesser aufweist, und mehreren ortsfesten, radial einwärts gerichtete, in den Mahlraum hineinragende Statormesser, die zusammen mit den Schneidmessern einen Messerspalt bilden, **dadurch gekennzeichnet, daß** in Drehrichtung (24) der Rotorwalze (17) vor den Statormessern (9) sich sichelförmig nach außen radial erweiternde Schneideräume (23) ausgebildet sind, welche sich radial auswärts des Drehkreises (29) der rotierenden Schneidmesser (7) befinden.

2. Messermühle nach Anspruch 1, **dadurch gekennzeichnet, daß** die maximale radiale Breite (31) des sichelförmigen Schneideraumes (23) gleich groß oder geringfügig größer ist als die gewünschte Korngröße des zu zerkleinernden Materials.

3. Messermühle nach einem der Ansprüche 1 oder 2, **dadurch gekennzeichnet, daß** die Statormesser (9) gleichmäßig und/oder symmetrisch über den Umfang des Mahlraumes (16) verteilt angeordnet sind.

4. Messermühle nach einem der Ansprüche 1 bis 3, **dadurch gekennzeichnet, daß** die Rotorwalze (17) als Hohlwelle ausgebildet ist und radial nach innen gerichtet Innenschneidmesser (6) sowie radial nach außen gerichtete Außenschneidmesser (7) aufweist.

5. Messermühle nach einem der Ansprüche 1 bis 4, **dadurch gekennzeichnet, daß** zum Einbringen des zu zerkleinernden Materials ein Längsförderer in Form einer Förderschnecke (2) oder dgl. vorgesehen ist.

6. Messermühle nach einem der Ansprüche 1 bis 5, **dadurch gekennzeichnet, daß** die Förderschnecke (2) koaxial zur Rotorwalze (17) gelagert ist.

7. Messermühle nach einem der Ansprüche 1 bis 6, **dadurch gekennzeichnet, daß** die Förderschnecke (2) an ihren Außenflächen (21) Schneidkanten (22) aufweist, welche mit den Innenschneidmessern (6) der Rotorwalze (17) zusammenwirken.

8. Messermühle nach einem der Ansprüche 1 bis 7, **dadurch gekennzeichnet, daß** im Endbereich der Förderschnecke (2) ein ortsfestes Axialmesser (5) angeordnet ist, dem gegenüberliegend ein am axialen Ende der Förderschnecke (2) angeordnetes Gegenmesser (13) zugeordnet ist.

9. Messermühle nach einem der Ansprüche 1 bis 8, **dadurch gekennzeichnet, daß** die Öffnung (35) im Mahlraum (16) zum Einbringen des zu zerkleinernden Materials axial zur Rotorwalze (17) angeordnet ist.

10. Messermühle nach einem der Ansprüche 1 bis 9, **dadurch gekennzeichnet, daß** der größte Teil der Umfangsfläche des Mahlraums (16) von Lochsieben (10) umgrenzt ist.

11. Messermühle nach einem der Ansprüche 1 bis 10, **dadurch gekennzeichnet, daß** die Lochsiebe (10) als Siebkörbe (11) ausgebildet sind, die schwenkbar am Maschinengehäuse (8) gelagert sind.

12. Messermühle nach einem der Ansprüche 1 bis 11, **dadurch gekennzeichnet, daß** axial in Förderrichtung (15) des zu zerkleinernden Materials ein Luftstrom in den Mahlraum (16) eingeleitet wird.

## Claims

1. A cutting mill for disintegrating plastics material, with a rotor cylinder which is rotatingly driven in a milling chamber and has a plurality of radially outwardly-oriented cutting blades distributed around its circumference, and with a plurality of fixed, radially inwardly-oriented stator blades projecting into the milling chamber, which fixed blades, together with the cutting blades, form a cutting gap, **characterised in that** crescent-shaped cutting spaces (23) widening radially towards the outside and located radially outside the radius of rotation (29) of the rotating cutting blades (7) are formed ahead of the stator blades (9) in the direction of rotation (24) of the rotor cylinder (17).

2. A cutting mill according to Claim 1, **characterised in that** the maximum radial width (31) of the crescent-shaped cutting space (23) is as large as or slightly larger than the desired particle size of the material to be disintegrated.

3. A cutting mill according to one of the claims 1 or 2, **characterised in that** the stator blades (9) are distributed evenly and/or symmetrically around the circumference of the milling chamber (16).

4. A cutting mill according to one of the claims 1 to 3, **characterised in that** the rotor cylinder (17) is formed as a hollow shaft and has radially inwardly-oriented internal cutting blades (6) together with radially outwardly-oriented external cutting blades.

5. A cutting mill according to one of the claims 1 to 4, **characterised in that** a longitudinal conveyor in the form of a worm conveyor (2) or the like is provided to feed in the material to be disintegrated.

6. A cutting mill according to one of the claims 1 to 5, **characterised in that** the worm conveyor (2) is joumalled coaxially with the rotor cylinder (17).

7. A cutting mill according to one of the claims 1 to 6, **characterised in that** the worm conveyor (2) has on its outer faces (21) cutting edges (22) which co-operate with the internal cutting blades (6) of the rotor cylinder (17).

8. A cutting mill according to one of the claims 1 to 7, **characterised in that** a fixed axial blade (5) is arranged in the end region of the worm conveyor (2), opposite which axial blade (5) is arranged an associated opposed blade (13) on the axial end of the worm conveyor (2).

9. A cutting mill according to one of the claims 1 to 8, **characterised in that** the aperture (35) in the milling chamber (16) for feeding in the material to be disintegrated is arranged axially with respect to the rotor cylinder (17).

10. A cutting mill according to one of the claims 1 to 9, **characterised in that** the major part of the circumferential surface of the milling chamber (16) is delimited by perforated screens (10).

11. A cutting mill according to one of the claims 1 to 10, **characterised in that** the perforated screens (10) are formed as perforated baskets (11) which are pivoted to the machine housing (8).

12. A cutting mill according to one of the claims 1 to 11, **characterised in that** an airflow is introduced axially into the milling chamber (16) in the feed direction (15) of the material to be disintegrated.

## Revendications

1. Broyeur à lames pour le broyage de matière plastique, comportant un cylindre de rotor qui est entraîné en rotation dans une chambre de broyage et qui comprend plusieurs lames coupantes agencées en répartition à la périphérie et dirigées radialement vers l'extérieur, et plusieurs lames de stator stationnaires dirigées radialement vers l'intérieur et pénétrant dans la chambre de broyage, qui forment conjointement avec les lames coupantes une fente de lame, **caractérisé en ce qu'**il est prévu, en direction de rotation (24) du cylindre de rotor (17) en avant des lames de stator (9), des espaces de coupe (23) qui s'élargissent radialement vers l'extérieur en forme de croissant et qui se trouvent radialement à l'extérieur du cercle de rotation (29) des lames coupantes en rotation (7).

2. Broyeur à lames selon la revendication 1, **caractérisé en ce que** la largeur radiale maximale (31) de l'espace de coupe en forme de croissant (23) est égale ou légèrement supérieure à la taille granulométrique désirée de la matière à broyer.

3. Broyeur à lames selon l'une ou l'autre des revendications 1 et 2, **caractérisé en ce que** les lames de stator (9) sont agencées en répartition régulière et/ou symétrique sur la périphérie de la chambre de broyage (16).

4. Broyeur à lames selon l'une des revendications 1 à 3, **caractérisé en ce que** le cylindre de rotor (17) est réalisé sous forme d'arbre creux et comprend des lames coupantes intérieures (6) dirigées radialement vers l'intérieur ainsi que des lames coupantes extérieures (7) dirigées radialement vers l'extérieur.

5. Broyeur à lames selon l'une des revendications 1 à 4, **caractérisé en ce que** pour introduire la matière à broyer, il est prévu un convoyeur allongé sous forme d'une vis de convoyage (2) ou similaire.

6. Broyeur à lames selon l'une des revendications 1 à 5, **caractérisé en ce que** la vis de convoyage (2) est montée coaxialement par rapport au cylindre de rotor (17).

7. Broyeur à lames selon l'une des revendications 1 à 6, **caractérisé en ce que** la vis de convoyage (2) comprend sur ses surfaces extérieures (21) des arêtes coupantes (22) qui coopèrent avec les lames coupantes intérieures (6) du cylindre de rotor (17).

8. Broyeur à lames selon l'une des revendications 1 à 7, **caractérisé en ce que** dans la zone d'extrémité de la vis de convoyage (2) est agencée une lame stationnaire axiale (5) à laquelle est associée, en vis-à-vis de celle-ci, une lame antagoniste (13) agencée à l'extrémité axiale de la vis de convoyage (2).

9. Broyeur à lames selon l'une des revendications 1 à 8, **caractérisé en ce que** l'ouverture (35) dans la chambre de broyage (16), destinée à introduire la matière à broyer, est ménagée axialement par rapport au cylindre de rotor (17).

10. Broyeur à lames selon l'une des revendications 1 à 9, **caractérisé en ce que** la majeure partie de la surface périphérique de la chambre de broyage (16) est entourée par des tamis à trous (10).

11. Broyeur à lames selon l'une des revendications 1 à 10, **caractérisé en ce que** les tamis à trous (10) sont réalisés sous forme de paniers à tamis (11) qui sont montés de façon mobile en basculement sur le bâti de machine (8).

12. Broyeur à lames selon l'une des revendications 1 à 11, **caractérisé en ce qu'**un courant d'air est introduit dans la chambre de broyage (16) axialement en direction de convoyage (15) de la matière à broyer.
